# EUROPÄISCHE PATENTANMELDUNG

(11) **EP 1 086 775 A1**
(43) Veröffentlichungstag der Anmeldung: **28.03.2001**
(21) Anmeldenummer: 99118759.2
(22) Anmeldetag: 23.09.1999
(51) Int. Cl.: B23K 20/02, A47J 27/00

(54) **Verfahren und Vorrichtung zum Herstellen eines Doppelschichtbodens eines Topfes**

(71) Anmelder: Gräbener Pressensysteme GmbH & Co. KG, D-57250 Netphen (DE)
(72) Erfinder: Oberste-Dommes, Ingo, 57399 Kirchhundem (DE); Hau, Egbert, 63856 Bessenbach (DE); Beisel, Winfried, 57234 Wilnsdorf (DE)
(74) Vertreter: Valentin, Ekkehard, Dipl.-Ing.

(57) **Zusammenfassung**

Bei einem Verfahren zum Herstellen eines Doppelschichtbodens eines Topfes (11) aus nichtrostendem Stahl, bei dem der Boden (14) eines topfartig vorgeformten Behälter-Hauptteils (12) an seiner Außenseite intermetallisch, durch Druckeinwirkung und davon hervorgerufener Fließverformung mit einer Platine (13) aus einem gut leitenden Metall und einem diese einschließenden metallischen Abdeckboden (15) verbunden wird, wobei diese Bauteile zuvor auf dem Behälterboden (14) fixiert werden und der Topf danach bis zum teigigen Zustand der Platine (13) erwärmt wurde, werden die Sandwichboden-Bauteile (14, 13, 15) durch einen Prägevorgang miteinander verbunden. Ein hierzu geeignetes Oberwerkzeug (9) ist geteilt ausgebildet und weist einen Innenstempel (20) und einen diesen konzentrisch umschließenden Außenring (21) auf, wobei der Innenstempel (20) gegenüber dem Außenring (21) voreilend (Spielmaß 24) angeordnet ist.

## Beschreibung

Die Erfindung betrifft ein Verfahren und eine Vorrichtung zum Herstellen eines Doppelschichtbodens eines Topfes aus nichtrostendem Stahl, bei dem der Boden eines topfartig vorgeformten Behälter-Hauptteils an seiner Außenseite intermetallisch, durch Druckeinwirkung und davon hervorgerufene Fließverformung mit einer Platine aus einem gut leitenden Material und einem diese einschließenden metallischen Abdeckboden verbunden wird, wobei diese Bauteile zuvor auf dem Behälterboden fixiert wurden und der Topf danach bis zum teigigen Zustand der Platine erwärmt wurde.

Ein solches Verfahren ist durch die DE-PS 22 58 795 bekanntgeworden. Es wird dort zunächst die Platte aus dem hoch-wärmeleitfähigen Werkstoff mit der Trägerfläche bzw. dem Außenboden aus rostfreiem Stahl des topfartig vorgeformten Behälter-Hauptteils ebenso wie eine darauf noch aufgelegte Stahlblechplatte in der gewünschten Lage durch Schweißen fest verbunden. Anschließend wird der Behälter mit dem Doppelschicht- bzw. Sandwichboden in einem Ofen auf eine im Bereich des Schmelzpunktes des hoch-wärmeleitfähigen Werkstoffs der Platine liegende Temperatur erwärmt. Die Vereinigung dieser Bauteile zu einer intermetallischen Verbindung geschieht anschließend in einem die Umrißflächen der Platine spielfrei umschließenden Preßwerkzeug mit einem momentanen Stoßdruck von 2000 bis 3500 kp/cm², d.h. mit sehr hoher Energie. Dabei soll eine Verformung der Platine mit Sicherheit vermieden werden, um zu erreichen, daß die gesamte auf die Platine aus dem hoch-wärmeleitfähigen Werkstoff übertragene Stoßenergie in den Bereich der zu verbindenden Oberflächen geleitet wird und dort als die Diffusion der Oberfläche bewirkende Stoßkraft ankommt und nicht teilweise in Verformungsarbeit umgesetzt wird.

Diese für eine intermetallische Verbindung des Sandwich-Bodens eines Topfes vorgegebene Lehre ist späterhin gemäß EP 0 209 745 B1 und DE 41 25 115 C2 zielorientiert aufgegriffen worden. Denn die Verbindung der Platine, in der Regel aus Aluminium, alternativ aus Kupfer, mit einerseits dem Topf- und andererseits dem äußeren Abdeckboden wird auch dort durch einen Stoßdruck bzw. einfacher oder mehrfacher Impulspressung mit sehr hoher Umformgeschwindigkeit und Energie durchgeführt. Dies erfordert in der Regel eine kraftgebundene Umformmaschine, bspw. eine Spindelschlagpresse; das Werkzeug trifft dabei mit großer Fallgeschwindigkeit auf den Topfboden auf. Abgesehen davon, daß ein solcher Prellschlag eine hohe Körperschallbelastung für das Maschinenpersonal und die Umgebung bedeutet, stellt sich auch ein frühzeitiger Verschleiß von Umformmaschine und Werkzeug ein, wenn das Oberwerkzeug auf das Unterwerkzeug aufschlägt und die Kraft von dem Unterbau der Umformmaschine aufgenommen werden muß. Außerdem ist die Umrüstbarkeit problematisch, weil die Spindel einer Spindelschlagpresse Verwirkungen unterliegt.

Der Erfindung liegt daher die Aufgabe zugrunde, ein Verfahren und eine Vorrichtung der gattungsgemäßen Art zu schaffen, mit denen sich die genannten Nachteile vermeiden lassen und insbesondere die intermetallische Verbindung maschinen- und umweltschonender durchführen läßt.

Diese Aufgabe wird mit einem Verfahren erfindungsgemäß dadurch gelöst, daß die Sandwichboden-Bauteile durch einen Prägevorgang miteinander verbunden werden. Der Erfindung liegt hierbei die durch zahlreiche Versuche bestätigte Erkenntnis zugrunde, daß eine hohe Umformgeschwindigkeit zur intermetallischen Verbindung nicht erforderlich ist, vielmehr durch einen Prägevorgang erreicht werden kann, bei dem die Umformgeschwindigkeit gegenüber dem bekannten Stoßdruck bzw. Impulspreßverfahren um eine Zehnerpotenz geringer ist. Damit läßt sich eine sowohl die Umformmaschine als auch die Umgebung schonende Umformung erreichen, denn es treten keine nennenswerte Geräusch- oder Körperschall-Emissionen auf. Beim Prägen entsteht mit zunehmendem spezifischen Druck auf die Platine ein radialer Werkstofffluß von innen nach außen und Richtung der äußeren Werkzeug-Begrenzungsflächen. Es konnten hierbei zwei Erscheinungen festgestellt werden, die beim Prägen überraschend zu einer intermetallischen Verbindung führen; nämlich
1. die zwischen der Platine und den stehenden Begrenzungsflächen einerseits des kapselartigen metallischen Abdeckbodens und andererseits dem Boden des Behälter-Hauptteils auftretende Relativbewegung,
2. der mit fortschreitender Umformung im System ansteigende spezifische Druck.

In Verbindung mit der Reibung an den Trennflächen führt dies zu der Warmverschweißung der unterschiedlichen Materialien.

Nach einem Vorschlag der Erfindung wird zum ausreichenden Materialfluß von innen nach außen die Platinendicke vergrößert und der Durchmesser entsprechend der Volumenkonstanz verkleinert. Das jeweilige Verhältnis von Dicke zu Durchmesser läßt sich ohne weiteres rechnerisch oder durch Versuche ermitteln. Das Fließverhalten der vorzugsweise bis knapp unterhalb der Schmelztemperatur erwärmten, teigigen Platine ist hierbei bekannt.

Die der Erfindung zugrundeliegende Aufgabe wird mit einer Vorrichtung dadurch gelöst, daß das Oberwerkzeug der Prägemaschine geteilt ausgebildet ist und einen Innenstempel und einen diesen konzentrisch umschließenden Außenring aufweist, wobei der Innenstempel gegenüber dem Außenring voreilend angeordnet ist. Hiermit läßt sich erreichen, daß beim erfindungsgemäßen, kontrollierten sowie material- und umweltschonenden Prägevorgang zunächst einmal die ansonsten einer intermetallischen Verbindung möglicherweise entgegenstehende, eingeschlossene Luft aus dem Zwischenraum von Platine und Abdeckboden sicher herausgepreßt wird, so daß nachteilige Lufteinschlüsse vermieden werden. Denn der vorzugsweise federbeaufschlagt voreilende Innenstempel des erfindungsgemäß zweiteiligen Oberwerkzeugs steht im unbelasteten Zustand ca. 2 mm vor der endgültigen Preßposition. Es trifft daher als erstes der Innenstempel auf den Sandwichboden auf und verlagert sich gegen die Federkraft, aufgebracht bspw. durch Druckfedern oder elastisch nachgiebige Kunststoff-Einlagen, gegen die Preßrichtung nach hinten in das Oberwerkzeug hinein, bis es in der endgültigen Preßposition auf Block gefahren ist. Während dieses Zurückweichens des Innenstempels wird die Luft aus den Trennflächen verdrängt. Sobald der Innenstempel auf Block gefahren ist, wird die Form durch den Außenring geschlossen, und danach findet die Umformung bzw. intermetallische Verbindung statt. Um solche Luft-Einkammerungen zu vermeiden, wurde bisher, z.B. gemäß der DE 41 25 115 C2, der Abdeckboden mit einer stufenartigen Verformung an den Aufnahmebehälter angepreßt, wobei die Impulspressung unter Ausformung einer konvexen Krümmung des Abdeck- bzw. Kapselabdeckungsbodens durchgeführt wird, um bei der Impulspressung zuerst die Luft aus dem Bereich zwischen der Blechscheibe (Abdeckboden) und den sich ausbildenden Kapselabdeckungskragen herauszudrücken.

Eine Ausgestaltung der Erfindung sieht vor, daß der Außenring gefedert ist. Durch die Federung wird die zentrierende Wirkung des Außenrings beim Schließen der Form begünstigt, da über den Umfang des sich über den Sandwichboden legenden Außenringes eine gewisse "Atmungsfähigkeit" und damit ein selbsttätiger Ausgleich an die konkrete Lage des Sandwichbodens gegeben ist.

Nach einer bevorzugten Ausführung der Erfindung wird zur Prägeumformung eine mechanische, weggebundene Presse mit Kniehebelantrieb für den das bewegliche Werkzeug auf und ab bewegenden Stößel eingesetzt. Der aus dem Antriebskonzept einer solchen Kniehebelpresse begründete Bewegungsablauf und deren Systemsteifigkeit sind wesentliche Faktoren für die erfindungsgemäße Prägeumformung. Die Bewegung des Werkzeugs wird mit zunehmendem Druck immer langsamer. Der Stößel verweilt quasi im Druckpunkt und hält die teigige Masse der Platine in Position, bis die Platine durch den konvektiven Wärmeabfall erstarrt. Die Steifigkeit der Kniehebelpresse kompensiert zugleich größtenteils die Volumentoleranzen des vorzugsweise von vornherein als Kapsel ausgebildeten Abdeckbodens. Das Schließmaß der verwendeten Kniehebelpresse bleibt weitestgehend unverändert, unabhängig davon, ob ein Kniehebel-Oberantrieb oder ein Kniehebel-Unterantrieb vorgesehen ist, wenngleich bei einem verschiebbarem Unterstempel der Pressenhub und damit der Aufwand für die Presse geringer gehalten werden kann.

Beim Einsatz einer Kniehebelpresse mit ihrem besonderen Bewegungsablauf werden die Nachteile der bekannten Stoßdruck- bzw. Impulspreßverfahren mit einer Schlagspindelpresse oder mit einem Fallhammer vermieden. Diese Nachteile sind insbesondere darin zu sehen, daß Maschinenschäden bis hin zum Spindelbruch auftreten, kürzere Werkzeugstandzeiten vorliegen und eine Lärmbelästigung aufgrund des Körperschalls unvermeidlich ist. Hingegen ist bei einer zum erfindungsgemäßen Prägen eingesetzten Kniehebelpresse die Stößelgeschwindigkeit um eine Zehnerpotenz geringer als beim Spindelschlag. Dies schont die Werkzeuge und die Maschine. Ein Körperschall, der beim Spindelschlag extrem hoch ist, was zu einer inhumanen Arbeitsumgebung führt, tritt bei der Kniehebelpresse erst gar nicht auf.

Weitere Einzelheiten und Vorteile der Erfindung ergeben sich aus den Ansprüchen und der nachfolgenden Beschreibung anhand eines in der Zeichnung dargestellten Ausführungsbeispiels der Erfindung. Es zeigen:
- Figur 1: in schematischer, perspektivischer Gesamtansicht eine Kniehebel-Oberantriebspresse ohne Werkzeug-Bestückung;
- Figur 2: als Einzelheit eine in die in Fig. 1 dargestellte Presse zu integrierende Werkzeug-Einheit; und
- Figur 3: als Einzelheit der Fig. 2 den dort auf den Stempel des Unterwerkzeugs aufgesetzten Topf vor (rechte Hälfte der Fig. 3) und nach dem Prägen des Sandwich- bzw. Doppelschichtbodens dargestellt.

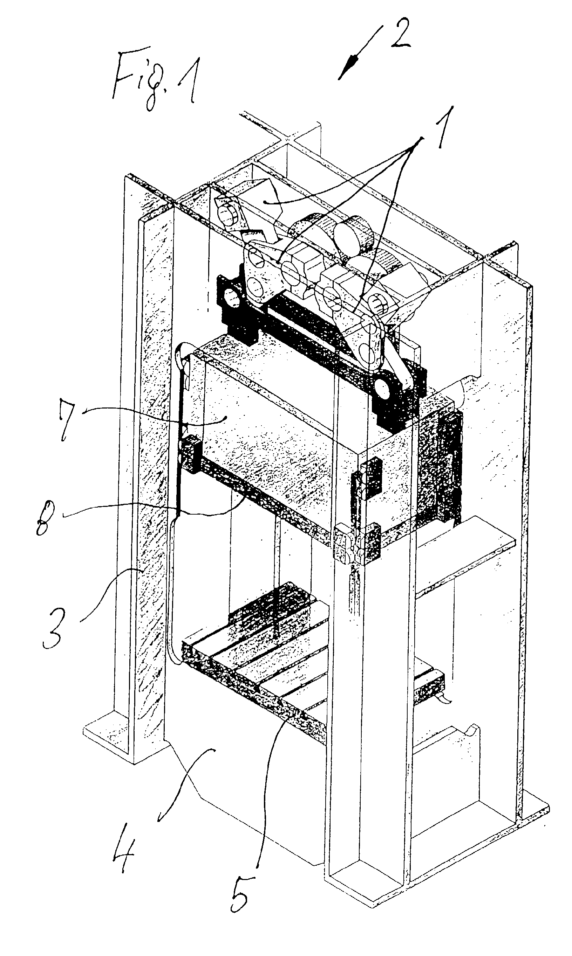

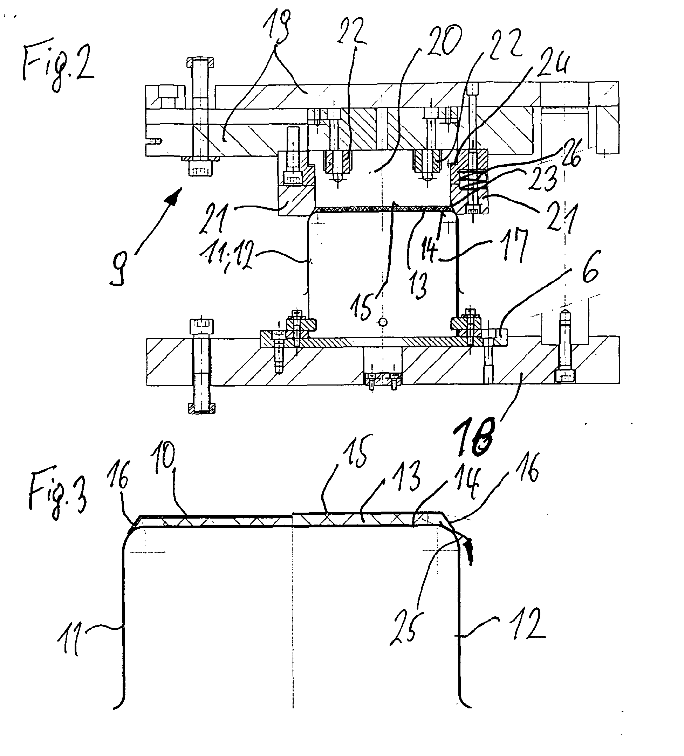

Eine als solche hinlänglich bekannte, im Ausführungsbeispiel nach Fig. 1 mit einem Kniehebel-Oberantrieb 1 - alternativ ist ein Kniehebel-Unterantrieb möglich - gezeigte Kniehebelpresse 2 weist in ihrem Maschinenrahmen 3 einen Pressentisch 4 mit einer Aufspannplatte 5 für ein Unterwerkzeug 6 (vgl. Fig. 2) und einen in dem Maschinenrahmen geführten Stößel 7 mit einer Aufspannplatte 8 für ein Oberwerkzeug 9 (vgl. Fig. 2) auf. Beim Betätigen eines nicht gezeigten Antriebs (bestehend aus einem Elektromotor, einer Schwungscheibe und einem Vorgelegegetriebe) wird der Kniehebelantrieb 1 in seine Strecklage bzw. umgekehrt gebracht und dabei der Stößel 7 in Richtung auf das Pressengestell 4 und damit das Unterwerkzeug 6 auf und ab bewegt.

Zum Herstellen eines Doppelschicht- bzw. Sandwichbodens 10 eines Topfes 11 (vgl. die linke Hälfte von Fig. 3), wird auf ein topfartig vorgeformtes Behälter-hauptteil 12 eine Platine 13 aus einem gut leitenden Metall (Aluminium) von außen auf den Boden 14 des Behälter-Hauptteils 12 aufgelegt und über die Platine 13 ein als Kapsel 15 mit nach unten abstehendem, umlaufenden Kragen 16 ausgebildeter Abdeckboden gestülpt (vgl. die rechte Hälfte von Fig. 3). Diese Bauteile werden in kaltem Zustand mittels Punktschweißung koaxial auf dem Topfboden 14 befestigt. Die Punktschweißung dient zur Positionserhaltung während der Erwärmung (induktiv oder Gasofen) des solchermaßen zum Prägen vorbereiteten Topfes auf ca. 500 °C.

Das erwärmte Behälter-Hauptteil 12 mit den Bauteilen 13, 15 des Sandwichbodens 10 wird mittels eines nicht dargestellten Handlingsystems mit der Öffnung nach unten auf einen verfahrbaren Stempel 17 des über eine Zwischenplatte 18 auf der Aufspannplatte 5 des Pressentisches 4 befestigten Unterwerkzeugs 6 aufgesetzt, wie in Fig. 2 dargestellt. Durch Vorwärmen des Stempels 17 auf eine Temperatur von ca. 320 °C wird das Temperaturgefälle zwischen Topf und Werkzeug möglichst gering gehalten.

Sobald das in dieser Weise vorbereitete Behälter-Hauptteil 12 in die Mitte der Presse verfahren wurde und die in Fig. 2 dargestellte Preßposition einnimmt, wird zum Prägen des Sandwichbodens 10 das über Zwischenplatten 19 an der Aufspannplatte 8 des Stößels 7 befestigte Oberwerkzeug 9 zum Prägen des Sandwichbodens 10 auf das Unterwerkzeug 6 abgesenkt. Das Oberwerkzeug 9 ist zweiteilig ausgeführt und besteht aus einem Innenstempel 20 und einem dazu koaxial bzw. konzentrisch angeordneten Ringstempel bzw. Außenring 21, der innenseitig eine zu der Kontur der Kapsel 15 komplementäre Formgebung aufweist. Der Innenstempel 20 ist federbelastet - im Ausführungsbeispiel durch KunststoffEinlagen 22 - und damit im unbelasteten Zustand geringfügig gegenüber dem Außenring 21 bzw. dessen Übergang 23 zur dem Kapselkragen 16 angepaßten Konturanschrägung vorkragend und damit voreilend im Oberwerkzeug 9 angeordnet. Dieses Voreilungsmaß bzw. Spiel 24 ist in Fig. 2 durch den im unbelasteten Zustand freien Raum zwischen Außenring 21 und Innenstempel 20 zu erkennen. Beim Prägevorgang trifft somit zunächst der Innenstempel 20 auf die Kapsel 15 auf und verdrängt die zwischen der Kapsel und dem Boden 14 eingeschlossene Luft aus den Trennflächen (vgl. den Pfeil 25 in Fig. 3) nach außen. Bei zunehmender Schließbewegung der Werkzeuge 6, 9 geben die Kunststoffeinlagen 22 bzw. Federn nach, und sobald der Innenstempel auf Block gefahren und damit das Spiel 24 aufgehoben ist, wird die Form durch den Außenring 21 geschlossen und die Prägeumformung des Sandwichbodens 10 zur intermetallischen Verbindung von einerseits Platine 13 und andererseits Kapsel 15 mit dem Behälter-Hauptteil 12 durchgeführt. Der mit dem Sandwichboden 10 fertige Topf 11 ist in der linken Hälfte von Fig. 3 gezeigt. Die beim Prägen zentrierende Wirkung des Außenringes 21 beim Schließen der Form zum Prägevorgang wird durch Anordnung des Außenringes 21 mit Federpaketen 26 begünstigt.

## Patentansprüche

1. Verfahren zum Herstellen eines Doppelschichtbodens eines Topfes aus nichtrostendem Stahl, bei dem der Boden eines topfartig vorgeformten Behälter-Hauptteils an seiner Außenseite intermetallisch, durch Druckeinwirkung und davon hervorgerufener Fließpreßverformung mit einer Platine aus einem gut leitenden Metall und einem diese einschließenden metallischen Abdeckboden verbunden wird, wobei diese Bauteile zuvor auf dem Behälterboden fixiert wurden und der Topf danach bis zum teigigen Zustand der Platine erwärmt wurde,
**dadurch gekennzeichnet**,
daß die Sandwichboden-Bauteile durch einen Prägevorgang miteinander verbunden werden.

2. Verfahren nach Anspruch 1,
**dadurch gekennzeichnet**,
daß zum ausreichenden Materialfluß von innen nach außen die Platinendicke vergrößert und der Durchmesser entsprechend der Volumenkonstanz verkleinert wird.

3. Vorrichtung zum Durchführen des Verfahrens nach Anspruch 1,
umfassend ein Unterwerkzeug mit einem das aufgesetzte Behälter-Hauptteil abstützenden Stempel und ein Oberwerkzeug, wobei entweder das Unterwerkzeug oder das Oberwerkzeug von einem angetriebenen Stößel auf und ab beweglich ist,
**dadurch gekennzeichnet**,
daß das Oberwerkzeug (9) geteilt ausgebildet ist und einen Innenstempel (20) und einen diesen konzentrisch umschließenden Außenring (21) aufweist, wobei der Innenstempel (20) gegenüber dem Außenring (21) voreilend angeordnet ist.

4. Vorrichtung nach Anspruch 3,
**dadurch gekennzeichnet**,
daß der Innenstempel (20) federbeaufschlagt angeordnet ist.

5. Vorrichtung nach Anspruch 3 oder 4,
**dadurch gekennzeichnet**,
daß der Außenring (21) gefedert ist.

6. Vorrichtung nach einem der Ansprüche 3 bis 5,
**dadurch gekennzeichnet**,
daß zur Prägeumformung eine mechanische, weggebundene Presse (2) mit Kniehebelantrieb für das bewegliche Werkzeug (6 oder 9) auf und ab bewegende Stößel (7) eingesetzt ist
